# FASCICULE DE BREVET EUROPEEN

(11) **EP 0 417 681 B1**
(45) Date de publication et mention de la délivrance du brevet: **02.11.1994**
(21) Numéro de dépôt: 90117357.5
(22) Date de dépôt: 10.09.1990
(51) Int. Cl.: H04L 7/10

(54) **Dispositif de synchronisation à deux modes, notamment pour la récupération de la phase de l'horloge trame dans un système de transmission à l'alternat**
Zweimodem-Synchronisationseinrichtung, insbesondere für die Rückgewinnung der Rahmentaktphase in einem Halbduplex-Übertragungssystem
Dual mode synchronisation device, in particular for the recovery of the frame-clock phase in a half-duplex transmission system

(30) Priorité: 12.09.1989 FR 8911895
(43) Date de publication de la demande: 20.03.1991
(73) Titulaire: ALCATEL BUSINESS SYSTEMS, F-75008 Paris (FR)
(72) Inventeur: Medlicott, Mark, F-67400 Illkirch (FR)
(74) Mandataire: Weinmiller, Jürgen

(56) Documents cités:
- EP-A- 0 082 575
- GB-A- 2 174 871

## Description

Le domaine de l'invention est celui des dispositifs de récupération de phase, destinés à équiper un récepteur, dans un système de transmission numérique.

Un tel dispositif est connu du document GB-A-2 174 871 .

L'invention a été plus particulièrement développée dans le cadre d'un système de transmission numérique à l'alternat, dans lequel un récepteur ne reçoit une trame qu'à intervalles réguliers, ce qui nécessite de récupérer la phase d'une horloge locale à la fréquence trame, dont la période est un multiple important de la période de l'horloge bit locale.

On connait plusieurs principes de synchronisation applicables à des signaux de ce type.

Les solutions connues consistent généralement à effectuer la synchronisation à partir de la détection du premier bit de chaque trame reçue, ou encore par la détection d'un motif spécifique de synchronisation de trame. Ce motif peut par exemple être constitué d'un viol du code utilisé pour la transmission du signal.

Or, le principe de détection du premier bit de trame reçue présente l'inconvénient de présenter une grande sensibilité au bruit. D'autre part, la nécessité d'utiliser un motif de synchronisation spécifique constitue une pénalisation quant au débit et à la complexité relative supplémentaire des systèmes d'émission réception.

L'objectif de l'invention est de pallier ces inconvénients des systèmes existants.

Plus précisément, un premier objectif de l'invention est de fournir un système de synchronisation, notamment pour la synchronisation trame d'un récepteur recevant des trames à intervalles réguliers, qui soit de mise en oeuvre simple, et qui présente une grande immunité contre le bruit, tout en offrant une grande sensibilité pour l'accrochage de la fréquence trame.

Un autre objectif de l'invention est de fournir un tel dispositif de synchronisation qui permette, au moins pour certains types de codes d'expression du signal transmis,d'éviter d'utiliser un motif de synchronisation spécifique dans le signal transmis.

Un objectif complémentaire de l'invention est de fournir un système de synchronisation fournissant une indication de déphasage pertinente, utilisable par exemple pour effectuer une correction de phase dans une boucle à verrouillage de phase, extérieure au dispositif de l'invention. La boucle de verrouillage de phase peut par exemple être du type de celle protégée par une demande de brevet conjointe au nom des mêmes déposants, sous le titre "boucle de verrouillage de phase à accrochage rapide, notamment pour un système de transmission numérique à l'alternat".

Ces objectifs, ainsi que d'autres qui apparaîtront par la suite, sont atteints à l'aide d'un dispositif de synchronisation, notamment pour la récupération de synchronisation de la phase de l'horloge trame locale d'un récepteur, dans le cas d'un signal numérique formé de trames reçues à intervalles réguliers, ledit signal étant codé selon un code présentant une densité d'impulsion en ligne détectable, dispositif caractérisé en ce qu'il comprend :
- des premiers moyens d'accrochage de phase, délivrant une information de déphasage entre l'horloge locale et le signal reçu, lors de la détection de la présence en ligne dudit signal codé.
- des seconds moyens de récupération de phase, délivrant une information de déphasage entre l'horloge locale et le signal reçu, lors de la détection d'un point de référence de phase des trames reçues à l'intérieur d'une fenêtre temporelle centrée sur la phase de l'horloge locale.
- des moyens de sélection de l'information de déphasage délivrée par lesdits premiers moyens d'accrochage et lesdits seconds moyens de récupération de phase, sous commande d'une information binaire de perte ou d'acquisition de verrouillage de synchronisation respectivement.

Ainsi, le dispositif de synchronisation de l'invention comporte-t-il un double mode :
- un premier mode est utilisé pour atteindre l'état de synchronisation fondé sur un détecteur d'énergie en ligne. Ce mode est utilisé à l'initialisation du système, ainsi qu'à chaque occurrence d'un décrochage de synchronisation.
- l'autre mode est utilisé dès que l'état de synchronisation est atteint. Du fait qu'il repose sur un simple fenêtrage temporel d'un point de référence de phase des trames reçues, il présente une sensibilité au bruit plus faible que celle du mode d'accrochage.

Avantageusement, le code d'expression du signal transmis est du type du code WAL2, ledit point de référence de la trame reçue étant formé par le premier passage à zéro de chaque trame. Bien entendu, d'autres modes ou codes de transmission du signal peuvent être utilisés, associés à des points de référence de trame différents.

Selon une caractéristique avantageuse de l'invention, les moyens de délivrance de ladite information binaire de verrouillage de synchronisation sont constitués par un système basculant dont le premier état sélectionne l'information de phase délivrée par les moyens d'accrochage de phase, et le second état sélectionne l'information de phase délivrée par lesdits seconds moyens de récupération de phase, ledit système basculant étant activé par :
- des premiers moyens de forçage dudit premier état, lors d'une confirmation d'absence du point de référence de phase de la trame reçue dans ladite fenêtre temporelle pendant N trames consécutives.
- des seconds moyens de forçage dudit second état, lors d'une confirmation de présence du point de référence de phase de la trame reçue dans ladite fenêtre temporelle pendant M trames consécutives.

De cette façon, le basculement d'un mode de récupération de phase à l'autre s'effectue à la fois de façon suffisamment précoce, mais non intempestive, particulièrement dans le cas d'un signal affecté d'un bruit important.

Préférentiellement, lesdits premiers et seconds moyens de forçage sont constitués par des compteurs sélectivement activés et initialisés en fonction desdites informations délivrées par lesdits premiers moyens d'accrochage et seconds moyens de récupération de phase.

D'autres caractéristiques et avantages de l'invention apparaitront à la lecture de la description suivante d'un mode de réalisation préférentiel du dispositif de l'invention, donné à titre illustratif et non limitatif, et des dessins annexés dans lesquels :
- La figure 1 illustre l'échange des trames entre un terminal maître (par exemple un PABX) et un terminal esclave dans un système numérique de transmission à l'alternat.
- La figure 2 est un schéma bloc illustrant le principe de synchronisation à deux modes du dispositif suivant l'invention.
- La figure 3 est un schéma d'un mode de réalisation préférentiel de dispositif de synchronisation à deux modes, selon l'invention.
- La figure 4 est un diagramme de synchronisation présentant les principaux signaux du dispositif de la figure 3.

Le système de synchronisation décrit ci-après a été conçu pour un système transmission deux fils à l'alternat. Dans ce mode de réalisation, la transmission s'effectue selon un code spécifique du type du code WAL2.

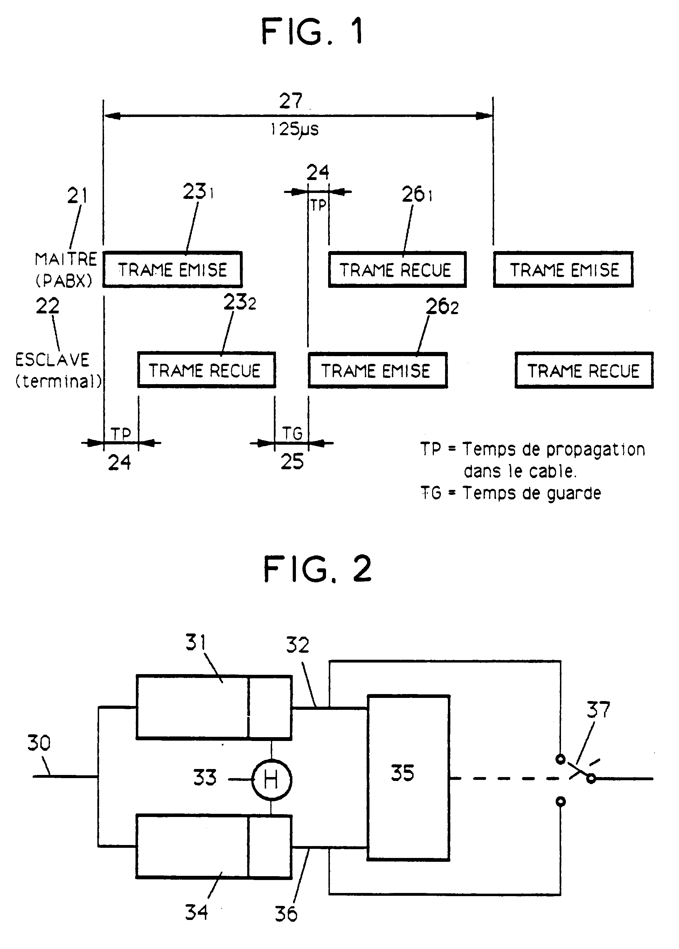

Un système de transmission à l'alternat envoie et reçoit des trames de données selon le schéma de la figure 1. En figure 1, la ligne 21 correspond à l'activité du terminal maître, et la ligne 22 à celle du terminal esclave d'une telle ligne. Le terminal maître est par exemple un PABX.

Le fonctionnement d'une telle liaison est le suivant.

Le maître 21 envoie une trame de données 23*₁* vers le terminal esclave 22. Après le temps de propagation TP 24 dans le câble, cette trame 23*₂* est reçue par l'esclave 22.

L'esclave 22 attend un certain temps pour permettre l'amortissement du signal en ligne (temps de garde 25) avant de procéder à l'envoi d'une trame 26*₂* vers le maître 21.

Le rythme des échanges des trames est controlé par le maître 21 qui, dans le cas spécifique présenté ici envoie une trame selon une période de temps 27 de 125 µs.

Dans ce système, une horloge bit et une horloge trame doivent être récupérées pour décoder les données reçues par le maître 21 et par l'esclave 22, et également pour assurer la bonne cadence des trames émises par l'esclave.

Selon l'invention, la synchronisation s'effectue par la comparaison de phase entre un point de référence unique contenu dans la trame reçue, avec une horloge de référence à la fréquence trame générée par l'horlogerie locale.

Cette fonction est par exemple effectuée par un comparateur de phase, qui fournit une information d'avance, de retard, ou encore de coïncidence de phase. Cette information est utilisable pour corriger la différence de phase détectée, dans un système extérieur au dispositif de l'invention (voir par exemple la demande de brevet conjointe sus-mentionnée).

Dans le mode de réalisation décrit ci-après, le code en ligne utilisé est le code WAL2. Ce code présente les caractéristiques suivantes :
- chaque symbole transmis contient de l'énergie;
- le seuil de détection optimal du comparateur de réception du signal est 0 volt;
- chaque symbole comporte un passage par 0 volt.

Ces caractéristiques permettent l'implémentation d'un dispositif de synchronisation, selon le principe de l'invention, sans ajouter un motif de synchronisation dans la trame.

On notera que le code biphase présente ces mêmes caractéristiques, et donc se passe également de l'utilisation d'un mode de synchronisation spécifique.

Le dispositif de l'invention est néanmoins compatible avec d'autres codes, comme le code AMI, moyennant l'ajoût d'au moins un symbole de synchronisation dans chaque trame.

Le dispositif de l'invention est un système double qui réduit la susceptibilité au bruit et permet une détection d'une perte de verrouillage par la comparaison des informations fournies par les deux modes de récupération de phase. Pour les deux modes, le point de référence de la trame reçue, dans le cas spécifique du code WAL2, est le premier passage par zéro de la trame. Avec le code WAL2 ce point de référence est toujours au même endroit dans la trame indépendamment des données transmises.

Ce système est illustré dans son principe en figure 2.

Un premier comparateur de phase 31 détecte le début de chaque trame du signal reçu 30 par la détection du niveau du signal en ligne. Avec le code WAL2 chaque bit reçu contient de l'énergie. Avant que la trame ne soit reçue, il y a un temps sans énergie en ligne. L'information "début de trame"' fournie par le détecteur d'énergie 31 est utilisée pour sélectionner, parmi tous les passages par zéro, le premier de la trame reçue. Ce passage par zéro est ensuite comparé en phase avec l'horloge de référence 33 délivrée par l'horlogerie locale pour donner une information 32 d'avance ou retard de phase.

Dès que le verrouillage est atteint, un deuxième comparateur de phase 34 intervient. Ce comparateur de phase 34 sélectionne le passage par zéro qui tombe dans une fenêtre placée autour du point de référence de l'horloge locale, pour fournir une information 36 de comparaison de phase, indépendamment du passage par zéro sélectionné par le détecteur d'énergie 31.

Un module de sélection 35, pilote un "commutateur" 37 de sélection, de l'un ou l'autre mode de synchronisation selon la logique suivante :
- si le passage par zéro sélectionné par le détecteur d'énergie 31 tombe dans cette fenêtre M fois de suite( dans un cas spécifique M = 4) on considère que le verrouillage est atteint, et le commutateur 37 sélectionne l'information de déphasage 36 fournie par le comparateur 34.
- si ce passage par zéro tombe en dehors de cette fenêtre N fois de suite (dans un cas spécifique N = 8) on considère que le verrouillage est perdu et le commutateur 37 sélectionne l'information de déphasage 32 fournie par le détecteur d'énergie 31.

Le mode de récupération de phase par fenêtrage 34 est moins sensible au bruit que celui 31 fonctionnant par détection d'énergie, mais il ne peut être utilisé que quand le verrouillage est atteint du fait qu'il ne peut pas distinguer le premier passage par zéro des autres passages à zéro contenus dans la trame reçue.

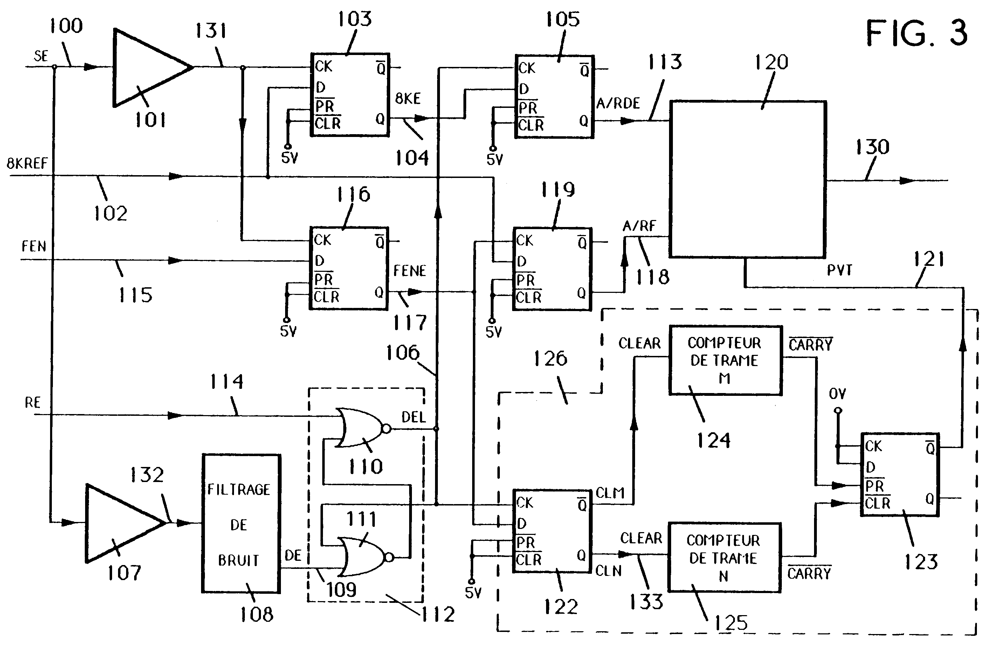

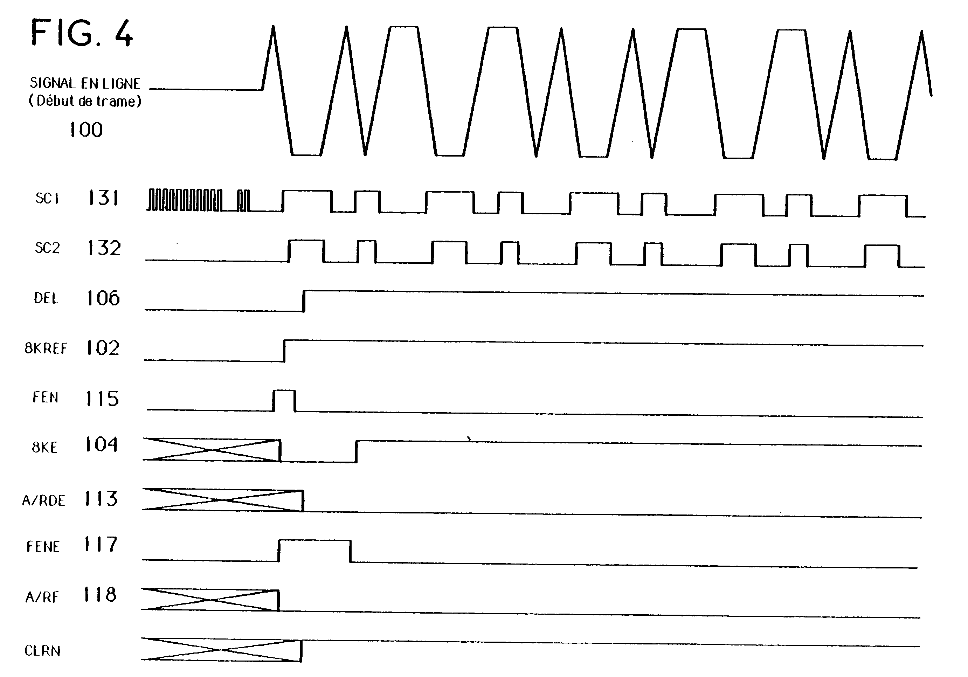

La figure 3 présente un mode de réalisation détaillé d'un dispositif fonctionnant selon le principe illustré en figure 2. La figure 4 représente la synchronisation des signaux principaux du circuit de la figure 3, lorsque l'horloge trame locale est à l'état synchronisé.

En figure 3,le comparateur 101 détecte les passages par zéro Volt du signal reçu 100. Dans ce cas spécifique du circuit représenté, uniquement les passages en front descendant (+ à -) sont détectés, le premier bit de la trame étant toujours un zéro binaire. La sortie de ce comparateur 101 échantillonne l'horloge de référence 8KREF 102 dans la bascule 103. L'horloge trame 8KREF 102 est générée par l'horlogerie locale et elle est synchrone avec les horloges bit et trame récupérées.

Si le passage par zéro est en avance par rapport au front montant de l'horloge locale de référence 8KREF 102, le signal 8KE 104 est mis à zéro. Si il est en retard, le signal 8KE 104 est mis à un. Le signal 8KE 104 indique, donc, la phase de chaque passage par zéro par rapport au front montant de 8KREF 102. L'information de la phase du premier passage par zéro de la trame est selectionnée par la bascule 105. Cette bascule 105 est déclenchée par le front montant du signal DEL 106. Le comparateur 107 détecte l'énergie de la trame reçue. Dans un mode de réalisation spécifique ce comparateur 107 a un seuil de détection de - 85mV.

La sortie du comparateur 107 est filtrée dans un module de filtrage 108. Une certaine période est comparée sans énergie suivie par une certaine période avec énergie avant que le signal DE 109 passe à un en sortie du module de filtrage 108. Le front montant de DE 109 déclenche la bascule R/S 112 formée par les portes 110 et 111. La bascule 112 est inhibée et remise à zero pendant la phase d'émission par le signal de réinitialisation RE 114. La sortie de la porte 110 déclenche la bascule 105 pour valider l'information de phase entre le front montant de 8 KREF 102 et le premier passage par zéro de la trame. Le signal A/RDE 113 est donc l'information de phase générée par le comparateur de phase avec détecteur d'énergie.

La fenêtre FEN 115 encadre le front montant de l'horloge locale à la fréquence trame 8KREF 102. Elle a une largeur telle qu'un seul passage par zéro peut exister dans la fenêtre à la fois. Elle est, cependant, suffisamment large pour que dans l'état synchronisé le premier passage par zéro de la trame tombe dans la fenêtre malgré la gigue superposée sur le signal reçu.

Les passages par zéro détectés en sortie du comparateur 101 échantillonnent le signal FEN 115. Dans l'état synchronisé le signal FENE 117 issu de la bascule 116 passe à un avec le premier passage par zéro de la trame. La montée du signal FENE 117 échantillonne le signal 8KREF 102 dans la bascule 119. La sortie 118 de cette bascule 119 indique le déphasage entre le front montant du signal 8KREF 102 et le premier passage par zéro de la trame. Les deux informations de phase A/RDE 113 et A/RF 118 forment les entrées du multiplexeur 120. Le signal de commande (PVT) 121 du multiplexeur sélectionne l'un ou l'autre de ces deux signaux selon l'état de synchronisation. La sortie 130 du multiplexeur 120 fournit une information d'avance, de retard, ou de coïncidence de phase.

Les deux bascules 122 et 123 forment avec les deux compteurs 124, 125 l'automate de synchronisation 126. La sortie CLRN 133 de la bascule 122 passe à un si le passage par zéro qui tombe dans la fenêtre est le premier passage par zéro de la trame reçue (passage par zéro selectionné par le détecteur d'énergie 107). Dans ce cas le compteur 125 de valeur N est remis à zéro et le compteur 124 de valeur M est activé. Si ce dernier compteur 124 compte M trames consécutives, ou si le premier passage par zéro de la trame tombe dans la fenêtre, la bascule 123 est pré-sélectionnée et on considère que la synchronisation est atteinte. Si ce passage par zéro tombe en dehors de la fenêtre avant que la synchronisation soit atteinte, le compteur 124 est remis à zéro.

Dans l'état synchronisé, si le premier passage par zéro de la trame tombe en dehors de la fenêtre N fois consécutives, le compteur 125 de valeur N remet à zéro la bascule 123.

La sortie 121 de la bascule 123 sélectionne donc selon l'état de synchronisation soit l'information de phase 113 venant du comparateur de phase avec détecteur d'énergie, soit l'information de phase 118 provenant du comparateur de phase avec fenêtre.

La figure 4 représente la synchronisation des principaux signaux du circuit de la figure 3, à l'état synchronisé du dispositif :
- le signal en ligne 100.
- les signaux détectés 131, 132, en sortie des comparateurs 101, 107 respectivement.
- le signal DEL 106 de déclenchement de la bascule 105.
- l'horloge de référence 8KREF 102 à la fréquence trame.
- Le signal de fenêtre temporelle FEN 115.
- le signal 8KE 104 indiquant la phase de chaque passage à zéro du signal reçu 100 par rapport au signal d'horloge 8KREF 102.
- le signal A/RDE 113 correspondant à l'information de phase générée par le comparateur de phase 101 avec détecteur d'énergie.
- le signal FENE 117 issu de la bascule 116.
- le signal A/RF 118 correspondant au déphasage entre le front montant du signal 8KREF 102 et le premier passage par zéro de la trame.
- le signal CLRN 130 de sortie de la bascule 122 de l'automate de synchronisation 126.

## Revendications

1. Dispositif de synchronisation, notamment pour la récupération de synchronisation de la phase de l'horloge trame locale d'un récepteur, dans le cas d'un signal numérique formé de trames reçues à intervalles réguliers, ledit signal étant codé selon un code présentant une densité d'impulsion en ligne détectable, dispositif caractérisé en ce qu'il comprend :
- des premiers moyens d'accrochage de phase (107,101) délivrant une information (113) de déphasage entre l'horloge locale et le signal reçu, lors de la détection de la présence en ligne dudit signal codé (100).
- des seconds moyens de récupération de phase (101), délivrant une information (118) de déphasage entre l'horloge locale et le signal reçu, lors de la détection d'un point de référence de phase des trames reçues à l'intérieur d'une fenêtre temporelle (115) centrée sur la phase de l'horloge locale (102).
- des moyens (120) de sélection de l'une des informations de déphasage (113,118) délivrée par lesdits premiers moyens d'accrochage et lesdits seconds moyens de récupération de phase, sous commande d'une information binaire (121) de perte ou d'acquisition de verrouillage de synchronisation respectivement.

2. Dispositif selon la revendication 1 caractérisé en ce que ledit code d'expression du signal reçu (100) est du type du code WAL2, ledit point de référence de chaque trame reçue etant formé par le premier passage à zéro du signal reçu (100).

3. Dispositif selon l'une quelconque des revendications 1 et 2 caractérisé en ce que les moyens de délivrance de ladite information binaire (121) de verrouillage de synchronisation sont constitués par un système basculant (126) dont le premier état sélectionne l'information de phase (113) délivrée par les moyens d'accrochage de phase, et le second état sélectionne l'information de phase (118) délivrée par lesdits seconds moyens de récupération de phase, ledit système basculant (126) étant activé par :
- des premiers moyens (125) de forçage dudit premier état, lors d'une confirmation d'absence du point de référence de phase de la trame reçue dans ladite fenêtre temporelle (115) pendant N trames consécutives.
- des seconds moyens (124) de forçage dudit second état, lors d'une confirmation de présence du point de référence de phase de la trame reçue dans ladite fenêtre temporelle (115) pendant M trames consécutives.

4. Dispositif selon la revendication 3 caractérisé en ce que lesdits premiers et seconds moyens de forçage sont constitués par des compteurs (124, 125) sélectivement activés et initialisés en fonction desdites informations fournies par lesdits premiers moyens d'accrochage et seconds moyens de récupération de phase.

## Patentansprüche

1. Synchronisationseinrichtung, insbesondere zur Rückgewinnung der Synchronisation der lokalen Rahmentaktphase in einem Empfänger im Falle eines digitalen Signals, das aus in regelmäßigen Intervallen empfangenen Rahmen gebildet wird, wobei das Signal gemäß einem Kode verschlüsselt ist, der eine erfaßbare Leitungs-Impulsdichte besitzt, dadurch gekennzeichnet, daß die Einrichtung aufweist:
- erste Phaseneinrastmittel (107, 101), die eine Information über die Phasenverschiebung (113) zwischen dem lokalen Takt und dem empfangene Signal bei der Erfassung des kodierten Signals (100) auf der Leitung liefern,
- zweite Phasenwiedergewinnungsmittel (101), die eine Information über die Phasenverschiebung (118) zwischen dem lokalen Takt und dem empfangenen Signal bei der Erfassung eines Phasenbezugspunktes der Rahmen liefern, die innerhalb eines Zeitfensters (115) empfangen werden, das auf die lokale Taktphase (102) zentriert ist,
- Mittel (120) zum Wählen einer der Phasenverschiebungsinformationen (113, 118), die von den ersten Einrastmitteln und den zweiten Phasenwiedergewinnungsmitteln unter Steuerung durch eine binäre Information (121) über den Verlust bzw. das Erreichen der Synchronisationsverriegelung geliefert werden.

2. Einrichtung nach Anspruch 1, dadurch gekennzeichnet, daß der Ausdruckskode des empfangenen Signals (100) ein Kode WAL2 ist, wobei der Bezugspunkt jedes empfangenen Rahmens durch den ersten Nulldurchgang des empfangenen Signals (100) gebildet ist.

3. Einrichtung nach einem beliebigen der Ansprüche 1 und 2, dadurch gekennzeichnet, daß die Mittel zur Lieferung der binären Information (121) über die Synchronisationsverriegelung aus einem Kippschaltungssystem (126) bestehen, dessen erster Zustand die von den phaseneinrastmitteln gelieferte Phaseninformation (113) wählt, und dessen zweiter Zustand die von den zweiten Phasenwiedergewinnungsmitteln gelieferte Phaseninformation (118) wählt, wobei das Kippschaltungssystem (126) aktiviert wird durch:
- erste Mittel (125) zur Erzwingung des ersten Zustands bei einer Bestätigung des Fehlen des Phasenbezugspunkts des empfangenen Rahmens im Zeitfenster (115) während N aufeinanderfolgenden Rahmen,
- zweite Mittel (124) zur Erzwingung des zweiten Zustands bei einer Bestätigung des Vorliegens des Phasenbezugspunktes des empfangenen Rahmens im Zeitfenster (115) während M empfangene Rahmen.

4. Einrichtung nach Anspruch 3, dadurch gekennzeichnet, daß die ersten und zweiten Erzwingungsmittel aus Zählern (124, 125) bestehen, die in Abhängigkeit von den von den ersten Einrastmitteln und den zweiten Phasenwiedergewinnungsmitteln gelieferten Informationen selektiv aktiviert und initialisiert werden.

## Claims

1. Synchronization device, in particular for recovering phase synchronization of the local frame clock of a receiver, in the case of a digital signal formed by frames received at regular intervals, said signal being coded in a code having a detectable line pulse density, characterized in that it comprises:
- phase locking first means (107, 101) delivering an indication (113) of the phase difference between the local clock and the received signal when the presence on the line of said coded signal (100) is detected,
- phase recovery second means (101) supplying an indication (118) of the phase difference between the local clock and the received signal when a received frame phase reference point is detected in a time window (115) centered on the phase of the local clock (102), and
- means (120) for selecting one of the phase difference indications (113, 118) supplied by said phase locking first means and said phase recovery second means under the control of a respective binary indication (121) of loss or acquisition of synchronization.

2. Device according to claim 1 characterized in that said received signal (100) is coded in a WAL2 type code, said received frame reference point of each frame being formed by the first zero-crossing of the received signal (100).

3. Device according to claim 1 or claim 2 characterized in that the means delivering said binary indication (121) of acquisition of synchronization comprise a flip-flop system (126) whose first state selects the phase indication (113) supplied by said phase locking first means and whose second state selects the phase indication (118) supplied by said phase recovery second means, said flip-flop system (126) being activated by:
- first means (125) for forcing said first state on confirmation of absence of a received frame phase reference point in said window (115) during N consecutive frames,
- second means (124) for forcing said second state on confirmation of the presence of a received frame phase reference point in said window (115) during M consecutive frames.

4. Device according to claim 3 characterized in that said first and second forcing means comprise counters (124, 125) selectively activated and initialized according to said indications provided by said phase locking first means and phase recovery second means.
